# EUROPEAN PATENT APPLICATION

(11) **EP 2 211 101 A2**
(43) Date of publication of application: **28.07.2010**
(21) Application number: 09175916.7
(22) Date of filing: 13.11.2009
(51) Int. Cl.: F23N 5/02, F23R 3/28, F23N 5/24, F23N 5/16, F23N 5/08

(54) **Systems And Methods For Mitigating A Flashback Condition In A Pre-Mixed Combustor**

(30) Priority: 21.01.2009 US 356799
(71) Applicant: General Electric Company, Schenectady, NY 12345 (US)
(72) Inventor: ZIMINSKY, Willy Steve, Simpsonville, SC 29681 (US); UHM, Jong Ho, Simpsonville, SC 29681 (US); YORK, William David, Greer, SC 29650 (US)
(74) Representative: Gray, Thomas

(57) **Abstract**

A method may mitigate a flashback condition in a gas turbine. The gas turbine may include a fuel nozzle (102). The method may include detecting the flashback condition in the fuel nozzle (102), and interrupting a flow of fuel to the fuel nozzle (102).

## Description

### TECHNICAL FIELD

The present disclosure generally relates to systems and methods for mitigating a flashback condition in a gas turbine, and more particularly relates to systems and methods for mitigating a flashback condition in a pre-mixing fuel nozzle of a combustor.

### BACKGROUND OF THE INVENTION

Many gas turbines include a compressor, a combustor, and a turbine. The compressor creates compressed air, which is supplied to the combustor. The combustor combusts the compressed air with fuel to generate an air-fuel mixture, which is supplied to the turbine. The turbine extracts energy from the air-fuel mixture to drive a load.

In many cases, the gas turbine includes a number of combustors. The combustors may be positioned between the compressor and the turbine. For example, the compressor and the turbine may be aligned along a common axis, and the combustors may be positioned between the compressor and the turbine at an entrance to the turbine, in a circular array about the common axis. In operation, air from the compressor may travel into the turbine through one of the combustors.

The combustors may be operated at a relatively high temperature to ensure the air and fuel are adequately combusted, improving efficiency. One problem with operating the combustors at a high temperature is that a relatively high level of nitrogen oxides (NOx) may be generated, which may have a negative impact on the environment.

To reduce NOx emissions, some modem gas turbines employ premixing fuel nozzles. For example, each combustor may be supported by a number of premixing fuel nozzles, which may be positioned in a circular array about the combustor at an entrance to the combustor. During normal operation, the air from the compressor enters the combustor via the fuel nozzles. Within the fuel nozzles the air is "pre-mixed" with fuel to form the air-fuel mixture. The air-fuel mixture is then combusted in the combustor. Pre-mixing the air and fuel permits operating the combustors at relatively lower peak temperatures, which reduces the NOx produced as a by-product of the combustion process.

Although pre-mixing in the fuel nozzles permits reducing NOx emissions, the fuel nozzles present their own problems. Specifically, a flashback condition may occur in the gas turbine. For example, a flame in the combustion zone may travel upstream into the fuel nozzle. Alternatively, an auto-ignition event may ignite the air-fuel mixture in the fuel nozzle, such as due to a high preheat temperature, irregularities in the air-fuel mixture, stagnant air-fuel mixture zones, or fuel nozzle surface effects, among others. Regardless of the cause, the burning air-fuel mixture may tend to stabilize within the fuel nozzle, which may damage the fuel nozzle or other portions of the gas turbine, such as if the damaged hardware is liberated in the flow path. To address this problem, fuel nozzles have been designed to not stabilize any flame present therein. However, the design of such fuel nozzles has proved elusive in gas turbines fueled with relatively more reactive fuels such as hydrogen, which is undesirable as flashback and flame stabilization are relatively more likely to occur in such cases. Thus, a need exists for systems and methods for mitigating a flashback condition in a gas turbine.

### BRIEF DESCRIPTION OF THE INVENTION

A method may mitigate a flashback condition in a gas turbine. The gas turbine may include a fuel nozzle. The method may include detecting the flashback condition in the fuel nozzle, and interrupting a flow of fuel to the fuel nozzle.

### BRIEF DESCRIPTION OF THE DRAWINGS

There follows a detailed description of embodiments of the invention by way of example only with reference to the accompanying drawings, in which:
FIG. 1 is a schematic cross-sectional view of an embodiment of a prior art combustion system of a gas turbine;
FIG. 2 is a block diagram illustrating an embodiment of a system for mitigating a flashback condition in a fuel nozzle of a gas turbine;
FIG. 3 is a schematic cross-sectional view of an embodiment of a system for mitigating a flashback condition in a fuel nozzle of a gas turbine;
FIG. 4A is a graph illustrating operation of a fuel supply valve as a function of time, in accordance with an embodiment of a system for mitigating a flashback condition in a fuel nozzle of a gas turbine;
FIG. 4B is a graph illustrating a fuel flow to a fuel nozzle as a function of time, in response to the operation of the fuel supply valve illustrated in FIG. 4A; and
FIG. 5 is a flowchart illustrating an embodiment of a method of mitigating a flashback condition in a fuel nozzle of the gas turbine.

### DETAILED DESCRIPTION OF THE INVENTION

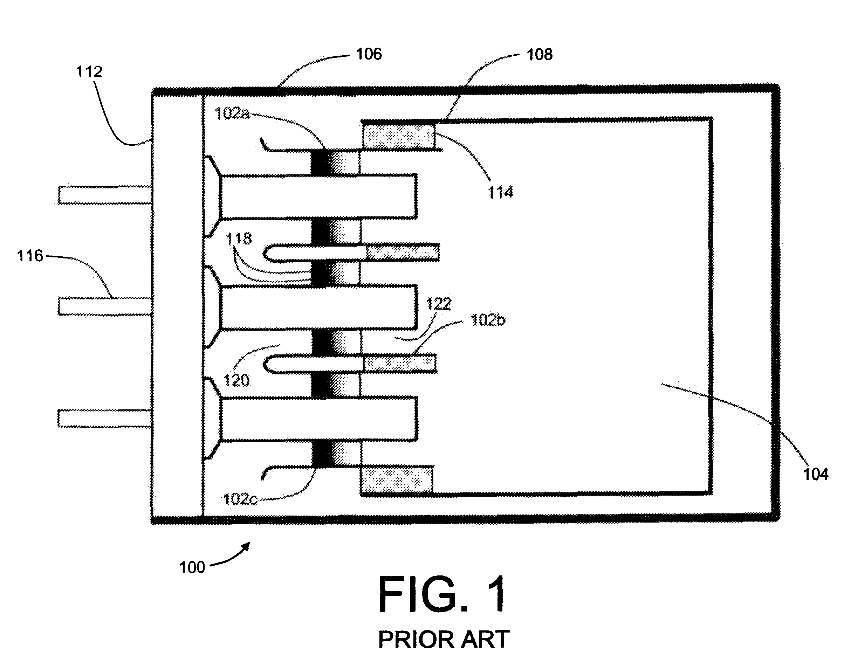

FIG. 1 is a cross-sectional view of a prior art combustion system 100 of a gas turbine. The combustion system 100 may be, for example, a pre-mixed combustion system. The combustion system 100 may generally include one or more fuel nozzles 102 and a combustion zone 104. Three fuel nozzles 102a, 102b, and 102c are shown for purposes of example, although any other number of fuel nozzles 102 may be used.

The combustion system 100 also may include an outer casing 106 and a combustion liner 108. Each of the fuel nozzles 102 may be secured to the outer casing 106 by an endcover 112 and to the combustion liner 108 by an inner cap 114.

In some embodiments, the fuel nozzles 102 may be pre-mixer nozzles, which mix air with fuel to form an air-fuel mixture. For example, the air may flow along an air flow path 120 and into the fuel nozzle 102. The fuel may flow from a fuel supply line 116 into one or more fuel injection ports 118 for mixing within the fuel nozzle 102. The air-fuel mixture may then travel along an air-fuel mixture path 122 out of the fuel nozzles 102 and into the combustion zone 104, where combustion occurs to produce hot gases for use in other sections of the gas turbine.

In embodiments, the fuel may be a hydrogen-rich fuel, such as a fuel that comprises 50% or more hydrogen by volume. However, other types of fuels may be used in other embodiments.

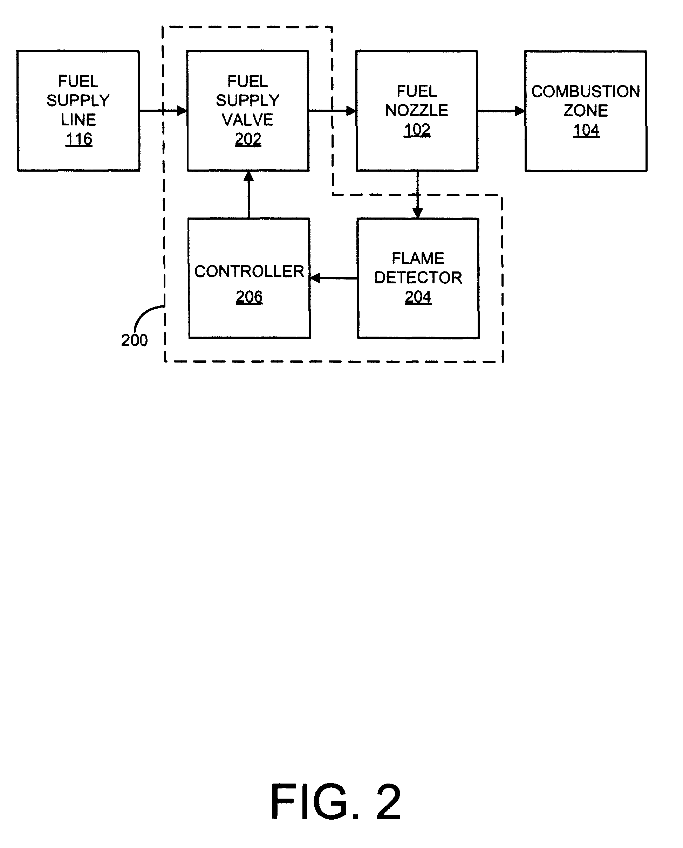

In some cases, a flashback condition may occur in the gas turbine. The flashback condition may occur in one or more of the fuel nozzles 102, such as along the air-fuel mixture path 122. For example, a flame present in the combustion chamber 104 may move upstream into the fuel nozzle 102. Alternatively, an auto-ignition event may ignite the air-fuel mixture in the fuel nozzle 102. Such flashback conditions may be relatively more likely to occur in cases in which a hydrogen-rich fuel is used, as such fuels are relatively more reactive. Regardless of the cause, however, the flashback condition in the fuel nozzle 102 may be reduced or extinguished using the system 200 shown in FIG. 2.

Specifically, FIG. 2 is a block diagram illustrating an embodiment of a system 200 for mitigating a flashback condition in a gas turbine, such as a flashback condition in a fuel nozzle 102 of the gas turbine. The system 200 may reduce or stop the fuel flow into the fuel nozzle 102 for a brief period of time, so that any flame present in the fuel nozzle 102 may be extinguished. Thus, the flame may be "cleared out" of the fuel nozzle 102 before the fuel nozzle 102 or other components of the gas turbine are substantially damaged. More particularly, the system 200 may intermittently interrupt or reduce the flow of fuel to the fuel nozzle 102, such as by cycling or pulsing the flow of fuel to the fuel nozzle 102. In some embodiments, the system 200 may pulse the fuel flow in response to a detected flame condition so that the detected flame is extinguished, while in other embodiments the system 200 may continuously cycle or pulse the fuel flow so that any flame that happens to be present in the fuel nozzle 102 is extinguished. In still other embodiments, the system 200 may stop the fuel flow for a brief period of time, such as a period of time that is less than one second. Regardless, the system 200 may provide sufficient fuel to the fuel nozzle 102 to prevent a "lean blow-out", wherein the flame within the combustion chamber 104 is extinguished. In other words, the system 200 may reduce or eliminate a flashback condition in the fuel nozzle 102, while permitting or maintaining a flame in the combustion chamber 104. Thereby, flame damage to the fuel nozzle 102 or other components of the gas turbine may be reduced or eliminated, while the combustion process may be sustained.

The system 200 may include a fuel supply valve 202, a flashback detector 204, and a controller 206. The fuel supply valve 202 may be a solenoid valve or any other valve known in the art. The fuel supply valve 202 may be positioned on the fuel supply line 116 upstream of the fuel nozzle 102. The fuel supply valve 202 may be operated to permit fuel to flow into the fuel nozzle 102, to prevent fuel from flowing into the fuel nozzle 102, or in some embodiments, to vary the volume of fuel flowing into the fuel nozzle 102. In some embodiments, the fuel supply valve 202 may be associated with a single fuel nozzle 102, while in other embodiments the fuel supply valve 202 may be associated with a number of fuel nozzles 102. For example, the fuel supply valve 202 may be positioned upstream of a manifold that directs fuel into more than one of the fuel nozzles 102, in which case the fuel supply valve 202 may be operated to permit, prevent, or in some cases, vary the fuel flow into the one or more of the associated fuel nozzles 102. A person of skill may be able to implement these and other configurations based on the above disclosure, each configuration being included within the scope of the present invention.

The system 200 may also include a flashback detector 204. The flashback detector 204 may be operative to detect a flashback condition in one or more of the fuel nozzles 102. The position of the flashback detector 204 within the gas turbine may vary depending on the configuration of the flashback detector 204. In some cases, one flashback detector 204 may be associated with each fuel nozzle 102. For example, the flashback detector 204 may be a temperature sensor associated with the fuel nozzle 102, which detects a temperature increase in the fuel nozzle 102. As another example, the flashback detector 204 may be ion sensor associated with the fuel nozzle, which detects a flame ionization signature in the fuel nozzle 102. As yet another example, the flashback detector 204 may be a camera associated with the fuel nozzle 102, which captures an image of a flame in the fuel nozzle 102. As another example, the flashback detector 204 may be a flame detector associated with the fuel nozzle 102, which detects a flame luminosity in the fuel nozzle 102. In other cases, the flashback detector 204 may permit deducing that a flame is present in one of an array of fuel nozzles 102. For example, the flashback detector 204 may be a differential pressure sensor operative to determine that a static pressure difference across an array of fuel nozzles 102 exceeds an expected static pressure difference. As another example, the flashback detector 204 may be an acoustic pressure sensor or microphone operative to determine that an acoustic pressure signal in the combustion zone 104 differs from an expected acoustic pressure signal. Either of these detected conditions may indicate a flame is present in one or more of the fuel nozzles 102. The flashback detector 204 may also be any other detector now known or later developed, or combinations of these and other flashback detectors.

The system 200 may also include a controller 206. The controller 206 may be implemented using hardware, software, or a combination thereof for performing the functions described herein. By way of example, the controller 206 may be a processor, an ASIC, a comparator, a differential module, or other hardware means. Likewise, the controller 206 may comprise software or other computer-executable instructions that may be stored in a memory and may be executable by a processor or other processing means.

The controller 206 may be associated with the fuel supply valve 202. The controller 206 may be operable to control the fuel supply valve 202 to permit, prevent, or in some cases, vary the fuel flow to the fuel nozzle 102. For example, the controller 206 may send a signal to the fuel supply valve 202 (or associated electronics) to open the fuel supply valve 102, to close the fuel supply valve 102, or in some cases, to variably control the flow of fuel through the fuel supply valve 102.

In some embodiments, the controller 206 may close the fuel supply valve 202 for a brief period of time to extinguish any flame therein. For example, the controller 206 may close the fuel supply valve 202 for a period of time that is less than one second.

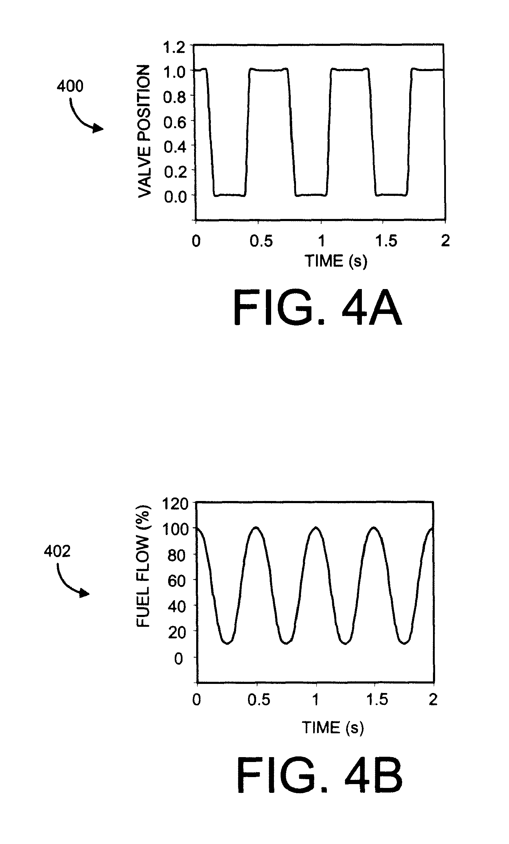

In some embodiments, the controller 206 may open and close the fuel supply valve 202 according to a predefined frequency. An example of such an embodiment is described below with reference to FIG. 4A and FIG. 4B. In some cases, the controller 206 may be a component of the fuel supply valve 202, while in other cases the controller 206 may be a separate component in communication with the fuel supply valve 202.

In some cases, the controller 206 may operate the fuel supply valve 202 in response to a flashback condition detected by the flashback detector 204. For example, the flashback detector 204 may provide an indication to the controller 206 that a flame is present in the fuel nozzle 102. Alternatively, the flashback detector 204 may provide a detected proxy to the controller 206, such as a detected temperature, and the controller 206 may process the detected proxy to determine whether a flame is present in the fuel nozzle 102. Either way, the controller 206 may operate the fuel supply valve 202 in response to the detected flame condition, such as by causing the fuel supply valve 202 to stop, reduce, cycle, pulse, or otherwise intermittently interrupt the flow of fuel to the affected fuel nozzle 102.

In some embodiments, the controller 206 may pulse the fuel flow for a predetermined period of time. In other embodiments, the controller 206 may pulse the fuel flow until the flashback detector 204 indicates that the flame condition has been extinguished. Thereby, the detected flashback condition may be extinguished.

In some embodiments, the fuel supply valve 202 may be a distributor valve that distributes fuel among a number of fuel nozzles 102. In such embodiments, the controller 206 may interrupt the flow of fuel from the distributor fuel supply valve to one or more of the fuel nozzles 102 in response to a detected flashback condition, such that the detected flashback condition may be extinguished.

In other cases, the controller 206 may operate the fuel supply valve 202 in response to a predefined program of operation, such as by opening and closing the fuel supply valve 202 at a predefined frequency to interrupt the flow of the fuel in the fuel line 116. For example, the fuel nozzles 102 may be arranged in an array, and the controller 206 may cycle or pulse the flow of fuel to each of the fuel nozzles 102 in succession. In other words, the controller 206 may interrupt the fuel flow to each nozzle 102 of the array one at a time, or according to any other predefined arrangement. In such cases, each fuel nozzle 102 may be intermittently interrupted to clear out any potential flame condition, and yet the combustion zone 104 may be continuously provided with a flow of air-fuel mixture for sustained combustion. The flashback detector 204 may or may not be omitted in such embodiments, which may substantially reduce the cost and time associated with implementing and operating the system 200.

It should be noted that fuel flow to the fuel nozzle 102 may be pulsed at a selected rate for a selected time period, the selected rate and selected time period being determined based on the configuration of the gas turbine.

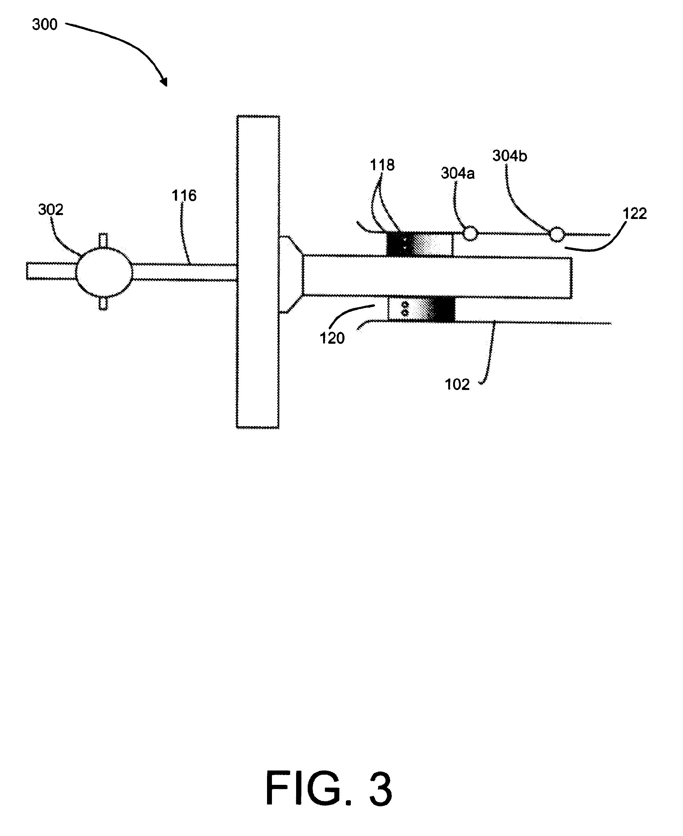

FIG. 3 is a schematic cross-sectional view of an embodiment of a system 300 for mitigating a flashback condition in a fuel nozzle 102 of a gas turbine. As shown, the system 300 includes a fuel nozzle 102, which may be a pre-mixer nozzle. The fuel nozzle 102 is connected to a fuel supply line 116. A fuel supply valve 302 is positioned on the fuel supply line 116 upstream of the fuel nozzle 102. The fuel supply valve 302 regulates a flow of fuel to the fuel nozzle 102. The fuel supply line 116 communicates fuel into the fuel nozzle 102 through one or more fuel injection ports 118.

As shown, a number of temperature sensors 304a and 304b are positioned in the fuel nozzle 102 downstream of the fuel injection ports 118. The temperature sensors 304a, 304b permit detecting a flashback condition inside the fuel nozzle 102. When a flashback condition is present inside the fuel nozzle 102, a resulting increase in temperature may be detected by one or more of the temperature sensors 304a, 304b. The temperature sensors 304a, 304b (or an associated controller, not shown in FIG. 3) may compare the detected, increased temperature with a predefined threshold temperature to determine that a flame is present in the fuel nozzle 102. In other embodiments, the temperature sensors 304a, 304b may be replaced or combined with other flashback detectors described above, or the flashback detectors may be omitted completely.

On detection of the flashback condition, the fuel supply valve 302 interrupts the flow of fuel to the fuel nozzle 102. In some embodiments, the fuel supply valve 302 may reduce the amount of fuel flowing through the fuel supply line 116. In other embodiments, the fuel supply valve 302 may stop the flow of fuel through the fuel supply line 116 to the fuel nozzle 102. Such operation of the fuel supply valve 302 may eliminate the flashback condition in the fuel nozzle 102. In embodiments, the fuel supply valve 302 may be operated in a manner that opens and closes the fuel supply line 116 at a predefined frequency. Such opening and closing of the fuel supply line 116 may produce a partial or complete flameout in the fuel nozzle 102, which may reduce or extinguish the flashback condition. The predefined frequency may be selected based on the configuration and operational parameters of the gas turbine, such as to avoid a lean blow-out condition in the combustion zone 104.

In embodiments, the system 300 may be used in association with a gas turbine that employs a hydrogen-rich fuel. A hydrogen-rich fuel may be comparatively more reactive than other fuels such as natural gas. Due to the reactivity, sustained combustion may occur in the combustion zone 104 even when fuel flow to the fuel nozzle 102 is interrupted, such that a lean blow-out condition may be avoided.

In embodiments, the fuel nozzle 102 may include swirl mixers such as a set of vanes (not show in the figure). In such embodiments, the fuel flow may be interrupted at the vane level instead of the nozzle level. For example, a flow propelled peddler wheel positioned upstream of the set of vanes inside the fuel nozzle may be operated, such as by the controller, to interrupt the fuel supply.

FIG. 4A is a graph illustrating operation of a fuel supply valve as a function of time, in accordance with an embodiment of a system for mitigating a flashback condition in a fuel nozzle of a gas turbine, and FIG. 4B is a graph illustrating a fuel flow to a fuel nozzle as a function of time, in response to the operation of the fuel supply valve illustrated in FIG. 4A. As shown in FIG. 4A, a position of the valve may be varied between 100% open and 100% closed, which are shown on the vertical axis as 1.0 and 0.0 respectively. As shown in FIG. 4B, the fuel flow through the fuel supply valve may vary between a maximum and a minimum in response to such movement of the fuel supply valve, which are shown on the vertical axis as 100% and 0% respectively.

With reference back to FIG. 4A, the valve may be varied between opened and closed positions every 0.33 seconds. Thus, the fuel supply valve may be operated at a predefined frequency of 1.5 Hz in the illustrated embodiment. In response, the fuel flow through the fuel supply valve may vary in time as a sinusoidal wave, as shown in FIG. 4B.

Although the fuel supply valve is moved between completely opened and completely closed positions in the graphed embodiment, a person of skill will understand that the valve may be moved in time between any combination of completely opened, partially opened, partially closed, and closed positions. Further, the fuel supply valve is operated at a predefined frequency of 1.5 Hz in the illustrated embodiment, although any other frequency or combination of frequencies is possible. The predefined frequency for interrupting or varying the fuel flow may be selected based on the configuration or operational parameters of the gas turbine. Additionally, the fuel flow may be cycled, interrupted, or varied in any manner, including manners other than opening or closing a fuel supply valve.

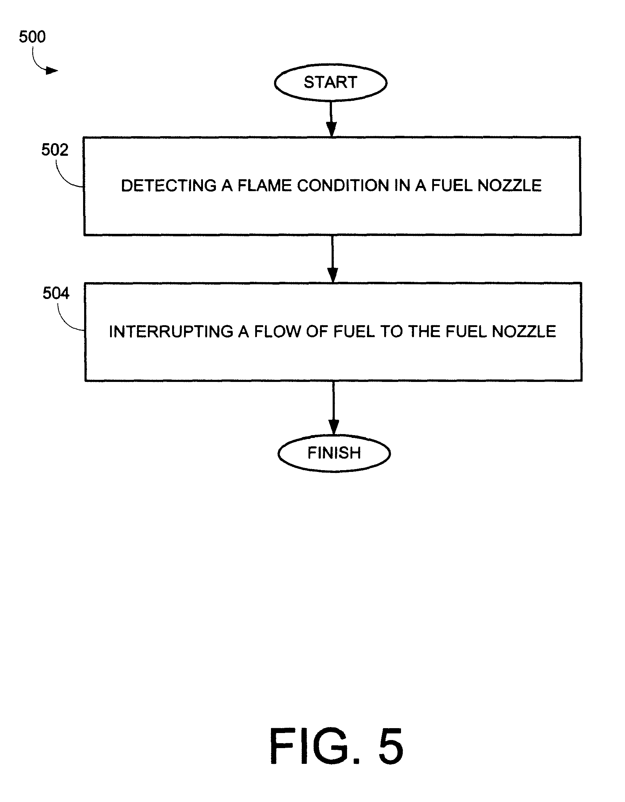

FIG. 5 is a flowchart illustrating an embodiment of a method for mitigating a flashback condition in a fuel nozzle of the gas turbine. In block 502, a flashback condition is detected in a fuel nozzle of a gas turbine. The gas turbine may have any configuration, including those described above. For example, the fuel nozzle may be a pre-mixer nozzle in a pre-mixed combustion system. The flashback may be detected using one or more of the following: temperature sensor, an ion sensor, a camera, a static pressure transducer, an acoustic pressure transducer, a flame detector, or a microphone. In block 504, a flow of fuel is interrupted to the fuel nozzle. In embodiments, the flow of fuel may be interrupted by stopping the flow of fuel to the fuel nozzle for a brief period of time. For example, the flow of fuel may be started and stopped, or pulsed, for a short period of time. A predefined frequency may be used for pulsing the flow of fuel. By interrupting or pulsing the fuel flow, the flame condition in the fuel nozzle may be reduced or extinguished.

In a gas turbine engine that uses a hydrogen-rich fuel, the systems and methods described above may permit reducing or avoiding flashback conditions in the fuel nozzles while maintaining a flame in the combustion zone. Thereby, a lean blow-out condition, wherein the flame in the combustion zone is extinguished, may be avoided.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of mitigating a flashback condition in a gas turbine, the gas turbine comprising a fuel nozzle (102), the method comprising:
detecting the flashback condition in the fuel nozzle (102); and
interrupting a flow of fuel to the fuel nozzle (102).

2. The method of claim 1, wherein detecting the flashback condition in the fuel nozzle (102) comprises comparing a temperature within the fuel nozzle (102) to a predetermined temperature.

3. The method of claim 1 or 2, wherein detecting the flashback condition in the fuel nozzle (102) comprises determining a pressure difference across the fuel nozzle (102) exceeds a predetermined pressure difference.

4. The method of any of the preceding claims, wherein detecting the flashback condition in the fuel nozzle (102) comprises determining an acoustic pressure signal in a combustion zone (104) differs from an expected acoustic pressure signal.

5. The method of any of the preceding claims, wherein interrupting a flow of fuel to the fuel nozzle (102) comprises stopping the flow of fuel to the fuel nozzle (102) for a predefined period of time.

6. The method of any of the preceding claims, wherein interrupting a flow of fuel to the nozzle comprises opening and closing a fuel supply valve (202) at a predefined frequency.

7. The method of claim 6, wherein the predefined frequency is about 1.5 Hz.

8. A system (200) for reducing a flame condition in a gas turbine, the gas turbine comprising a fuel supply line (116) in fluid communication with a fuel nozzle (102), the system (200) comprising:
a fuel supply valve (202) positioned on the fuel supply line (116);
a flashback detector adapted to detect the flame in the fuel nozzle (102); and
a controller (206) operable to repeatedly open and close the fuel supply valve (202) in response to the flashback detector detecting the flame in the fuel nozzle (102).

9. The system (200) of claim 8, wherein the flashback detector comprises one or more of the following: a temperature sensor, an ion sensor, a camera, an acoustic pressure transducer, a flame detector, and a static pressure transducer.

10. The system (200) of claim 8 or 9, wherein the controller (206) is operable to repeatedly open and close the fuel supply valve (202) at a predefined frequency.

11. A system comprising:
a fuel nozzle;
a fuel supply line in fluid communication with the fuel nozzle;
a fuel supply valve positioned on the fuel supply line upstream of the fuel nozzle;
a flashback detector associated with the fuel nozzle; and
a controller associated with the fuel supply valve, the controller operable to open and close the fuel supply valve.

12. The system of claim 11, wherein the fuel nozzle is a pre-mixer nozzle.

13. The system of claim 11 or 12, where in the fuel supply valve is a solenoid valve.

14. The system of any of claims 11 to 13, wherein the controller is operable to interrupt a flow of fuel through the fuel supply valve for a brief period of time.

15. The system of claim 14, wherein the brief period of time is less than one second.
